# EUROPEAN PATENT APPLICATION

(11) **EP 2 879 035 A1**
(43) Date of publication of application: **03.06.2015**
(21) Application number: 13853595.0
(22) Date of filing: 05.07.2013
(51) Int. Cl.: G06F 3/0487, H04M 1/725

(54) **SCREEN CONTROL METHOD AND TERMINAL**

(30) Priority: 12.11.2012 CN 201210450649
(71) Applicant: Xiaomi Inc., Beijing 100085 (CN)
(72) Inventor: SHI, Xinming, Beijing 100085 (CN); DI, Hao, Beijing 100085 (CN); SUN, Wei, Beijing 100085 (CN)
(74) Representative: Hanna, Peter William Derek
(86) International application number: PCT/CN2013/078926
(87) International publication number: WO 2014/071748

(57) **Abstract**

A screen control method and terminal are provided. The method comprises the following steps: when a terminal is in the process of a session or originating a call, determining whether the distance between a designated region of a screen of the terminal and a human body is larger than a distance threshold on the basis of electric signals generated by the screen when the designated region is close to the human body (101); controlling the screen to be shut off if it is determined that the distance is not larger than the distance threshold, and controlling the screen to be lit on if it is determined that the distance is larger than the distance threshold (102). The present invention can control the shutting off and lighting up of the screen more precisely when the terminal is in the process of a session or originating a call.

## Description

### TECHNICAL FIELD

The disclosure relates to a touch screen of a terminal and, more particularly, to a screen control method and terminal.

### BACKGROUND

Currently, touch-screen terminals become mainstream terminals. However, when a user makes a phone call via the terminal, the terminal may be mis-operated due to a long-time contact between the terminal screen and the user's face or head. In the related technology, the problem is solved by using optical sensing technology to control the screen to be on and off, and the principle of which is to sense the peripheral light condition with an optical sensor, and then inform a processing chip of a controller to turn the screen on or off. During the calling process, the optical sensor at the front of the terminal senses the peripheral light condition. When the terminal gets close to a human body (such as ear) within a certain distance, the optical sensor senses the light turns darker and the controller controls the screen to be off. When the terminal gets away from the human body for a certain distance, the optical sensor senses the light turns brighter, the controller controls the screen to be on.

However, it is lack of a measurable standard to determine the sensed light condition of the peripheral light, and the sensed condition is easy to be affected by the light intensity of the environment around the terminal. As a result, it is difficult to control the screen to be on and off precisely.

### SUMMARY OF INVENTION

An embodiment of the present disclosure discloses a screen control method and terminal, for solving the problem that the screen cannot be controlled to be on and off precisely during the calling or call originating process of the terminal in the prior art.

An embodiment of the disclosure discloses a method for controlling a terminal screen comprising:
during a calling process or a call originating process of the terminal, determining whether the distance between a specified area and a human body is greater than the distance threshold value based on an electrical signal generated by the screen when the specified area of the terminal screen gets close to the human body;
Turn off the screen if the distance is determinately not greater than the distance threshold value, and
Turn on the screen if the distance is determinately greater than the distance threshold value.

Furthermore, the step of determining whether the distance between the specified area and the human body is greater than the distance threshold value based on the electrical signal generated by the screen when the specified area of the terminal screen gets close to the human body comprising:
detecting a capacitance value of a contact capacitance generated by the screen when the specified area of the terminal screen gets close to the human body;
determining that the distance between the specified area and the human body is not greater than the distance threshold value when the capacitance value is not less than the capacitance threshold value;
determining that the distance between the specified area and the human body is greater than the distance threshold value when the capacitance value is less than the capacitance threshold value.

Furthermore, the step of determining whether the distance between the specified area and the human body is larger than a distance threshold value based on the electrical signal generated by the screen when the specified area of the terminal screen gets close to the human body comprising:
detecting the current value of a supply current of the contact capacitance generated by the screen when the specified area of the terminal screen gets close to the human body;
determining that the distance between the specified area and the human body is not greater than the distance threshold value when the current value is not less than the current threshold value;
determining that the distance between the specified area and the human body is greater than the distance threshold value when the capacitance value is less than the current threshold value.

Furthermore, a radio frequency module of the terminal is used to determine the terminal is in the calling process or the call originating process.

Furthermore, the specified area is located on the screen near an receiver.

An embodiment of the disclosure further discloses a terminal, comprising a detecting module for determining whether the distance between a specified area and a human body is greater than the distance threshold value based on an electrical signal generated by a screen when the specified area of the terminal screen gets close to the human body during a calling process or a call originating process of the terminal;

a controlling module, for controlling the screen to be off if it is determined that the distance is not greater than the distance threshold value, and controlling the screen to be on if is determined that the distance is greater than the distance threshold value.

Furthermore, the detecting module is used for determining the capacitance value of the contact capacitance generated by the screen when the specified area of the terminal screen gets close to the human body, and when the capacitance value is not less than the capacitance threshold value, determine that the distance between the specified area and the human body is not greater than the distance threshold value, and when the capacitance value is less than the capacitance threshold value, determine that the distance between the specified area and the human body is greater than the distance threshold value.

Furthermore, the detecting module is used for determining the current value of the supply current of the contact capacitance generated by the screen when the specified area of the terminal screen gets close to the human body, and when the current value is not less than the current threshold value, determine that the distance between the specified area and the human body is not greater than the distance threshold value, and when the capacitance value is less than the current threshold value, determine that the distance between the specified area and the human body is greater than the distance threshold value.

Furthermore, the terminal further comprising: a radio frequency module for determining the terminal is in the calling process or the call originating process, and for informing the detecting module.

Furthermore, the specified area of the detecting module used to measure the distance away from the human body is located on the screen near the receiver.

In the technical solution disclosed in the embodiments of the disclosure, during the calling or call originating process of the terminal, whether the distance between the specified area and the human body is greater than a distance threshold value is determined based on the electrical signal generated by the screen when the specified area on the terminal screen gets close to the human body. If the distance is determined not greater than the distance threshold value, the screen is controlled to be off, and if the distance is determined greater than the distance threshold value, the screen is controlled to be on. The method in the embodiments discloses a measurable control standard for controlling the screen to be on and off, compared to the method for sensing the light intensity by the optical sensor in the prior art, the method in the embodiments of the disclosure can control the screen to be on and off more precisely.

### BRIEF DESCRIPTION OF THE DRAWINGS

The present disclosure will become more fully understood from the detailed description given hereinafter and the accompanying drawings which are given by way of illustration only, and thus are not limitative of the present disclosure and wherein:
FIG. 1 is a flow chart showing a method for controlling a terminal screen in an embodiment of the disclosure;
FIG. 2 is a flow chart showing a method for controlling a terminal screen in a first embodiment of the disclosure;
FIG. 3 is a flow chart showing a method for controlling a terminal screen in a second embodiment of the disclosure;
FIG. 4 is a schematic diagram showing the structure of the terminal in a third embodiment of the disclosure.

### DETAILED DESCRIPTION

To control the screen to be on and off more precisely during the calling or call originating process of the terminal, embodiments of the disclosure disclose a terminal and a method for controlling the terminal screen. The preferred embodiments of the disclosure being thus described accompanying with the drawings, it will be the understood that the detailed description and specific examples, while indicating preferred embodiments of the disclosure, are given by way of illustration only, they are not used to limit the scope and range of the disclosure, and the features in different embodiments can be combined with each other under the situation that they are not conflict with each other.

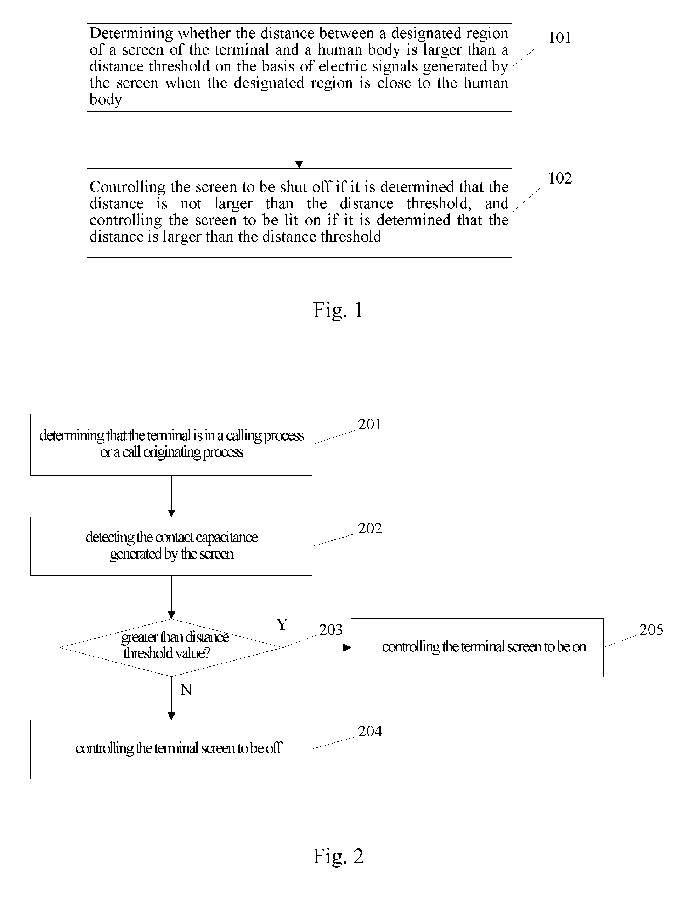

An embodiment of the disclosure discloses a method for controlling a terminal screen, as shown in FIG. 1, wherein the method comprises:

Step 101, determining whether the distance between a specified area and a human body is greater than a distance threshold value based on an electrical signal generated by the screen when the human body gets close to the specified area of the terminal screen during the calling or call originating process of the terminal.

Step 102, if it is determined that the distance is not greater than the distance threshold value, controlling the screen to be off, and if it is determined that the distance is greater than the distance threshold value, controlling the screen to be on.

The electrical signal in step 101 may be a contact capacitance generated by the screen when the specified area of the terminal screen gets close to the human body, and it may also be a supply current of the contact capacitance generated by the screen when the specified area of the terminal screen gets close to the human body. Correspondingly, determining whether the distance between the specified area and the human body is greater than the distance threshold value based on the electrical signal generated by the screen when the specified area of the terminal screen gets close to the human body may have two ways herein below:

The first way, detecting the capacitance value of the contact capacitance generated by the screen when the specified area of the terminal screen gets close to the human body;

when the capacitance value is not less than the capacitance threshold value, it is determined that the distance between the specified area and the human body is not greater than the distance threshold value;

when the capacitance value is less than the capacitance threshold value, it is determined that the distance between the specified area and the human body is greater than the distance threshold value.

The second way, detecting the current value of the supply current of the contact capacitance generated by the screen when the specified area of the terminal screen gets close to the human body;

when the current value is not less than the current threshold value, it is determined that the distance between the specified area and the human body is not larger than the distance threshold value;

when the capacitance value is less than the current threshold value, it is determined that the distance between the specified area and the human body is greater than the distance threshold value.

Hereinafter, the embodiments are used to illustrate the method and the terminal disclosed in the disclosure with the accompanying drawings.

### Embodiment 1

In the first embodiment, during the calling or call originating process of the terminal, based on whether the distance between the specified area of the terminal screen and the human body is greater than the distance threshold value, which can be determined based on the contact capacitance generated by the screen when the specified area of the screen gets close to the human body in practical application, the screen is controlled to be on and off.

For example, to take a capacitive touch screen as an example, when the human body contacts a capacitance sensing area on the screen, a coupling capacity is formed by the human body electric filed and the touch screen surface. Actually, if the human body gets close to the screen within a certain distance, even the human body does not contact the screen, the coupling capacity is also generated.

In the first embodiment of the disclosure, whether the distance between the screen and human body is greater than the distance threshold value is determined based on the contact capacitance generated by the screen when the human body gets close to the screen, thereby controlling the screen to be on and off.

FIG. 2 is a flow chart showing the method for controlling a terminal screen in the first embodiment of the disclosure. The detailed steps are shown as follows:

Step 201, determining that the terminal is in a calling process or a call originating process, in this step, a radio frequency module in the terminal may be used to detect and determine the calling state or call originating state when the user uses the terminal to call or initiate a call.

Step 202, during the calling or call originating process of the terminal, starting the detection of electrical signal generated by the screen when the specified area of the terminal screen gets close to the human body. Specifically, the detection may be detecting the capacitance value of the contact capacitance generated by the screen when the specified area of the terminal screen gets close to the human body.

In the first embodiment, the specified area of the terminal screen may be disposed flexibly according to actual demand, for example the specified area may be disposed on the screen near the receiver, and the size and shape of the specified area may be adapted to the size of the PCB (printed circuit board) around the receiver.

Step 203, determining whether the distance between the specified area and the human body is greater than the distance threshold value based on the detected capacitance value of the contact capacitance generated by the screen, if not, step 204 is executed, and if yes, step 205 is executed. The detailed determining ways are shown herein below.

When the capacitance value of the detected contact capacitance is not less than the capacitance threshold value, it is determined that the distance between the specified area and the human body is not greater than the distance threshold value, and when the capacitance value is less than the capacitance threshold value, it is determined that the distance between the specified area and the human body is greater than the distance threshold value. The capacitance threshold value is the capacitance value of the contact capacitance generated by the screen when the distance between the specified area and the human body equals to the distance threshold value.

Step 204, controlling the terminal screen to be off.

Step 205, controlling the terminal screen to be on.

By adopting the method disclosed in the first embodiment, whether the distance between the screen and the human body is greater than the distance threshold value is determined by the value relationship between the capacitance value of the contact capacitance generated by the screen when the screen gets close to the human body and the capacitance threshold value, as a result, the screen can be controlled on and off more precisely based on the measurable control standard.

### Embodiment 2

In the second embodiment, during the calling or call originating process of the terminal, according to whether the distance between the specified area of the terminal screen and the human body is greater than the distance threshold value, which can be determined based on the supply current of the contact capacitance generated by the screen when the specified area of the screen gets close to the human body in practical application, the screen is controlled to be on and off.

For example, to take a capacitive touch screen as an example, when the human body contacts the capacitance sensing area on the screen, a coupling capacity is formed by the human body electric filed and the touch screen surface. As to high-frequency current, the capacitor is a direct conductor, and the human body may absorb a small current which is generated through supplying of an electrode of the touch screen. The current may be called a supply current. Actually, if the human body gets close to the screen within a certain distance, even the human body does not contact the screen, the coupling capacity as well as the corresponding supply current is also generated.

In the second embodiment of the disclosure, whether the distance between the screen and human body is greater than the distance threshold value is determined based on the supply current of the contact capacitance generated by the screen when the human body gets close to the screen, thereby controlling the screen to be on and off.

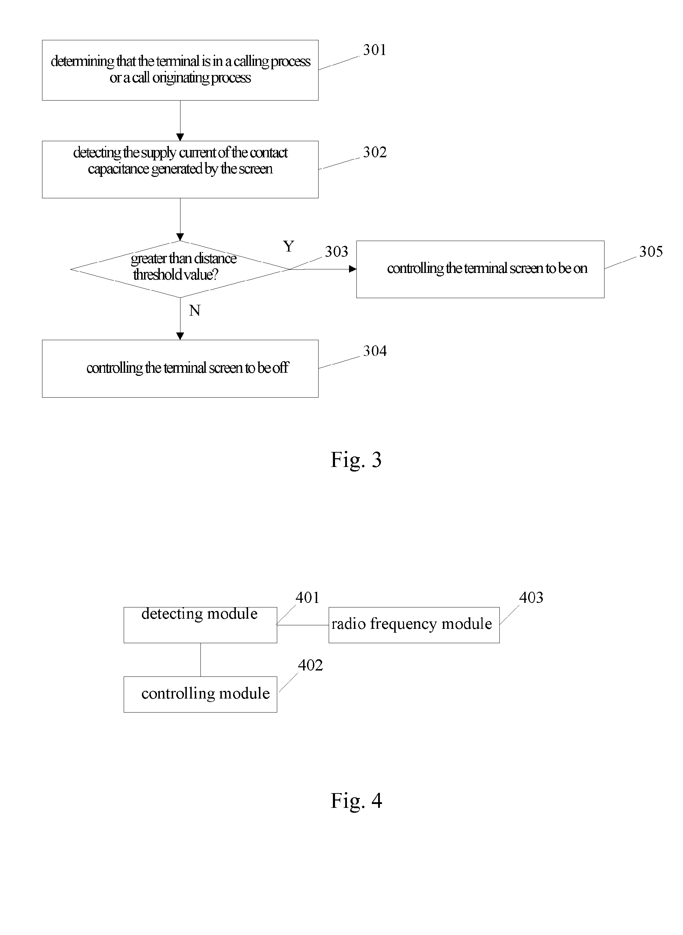

FIG. 3 is a flow chart showing the method for controlling a terminal screen in the second embodiment of the disclosure. The detailed steps are shown as follows:

Step 301, determining that the terminal is in a calling process or a call originating process, in this step, a radio frequency module in the terminal may be used to detect and determine the calling state or call originating state when the user uses the terminal to call or initiate a call.

Step 302, during the calling or call originating process of the terminal, launch the detection of electrical signal generated by the screen when the specified area of the terminal screen gets close to the human body. Specifically, the detection may be detecting the current value of the supply current of the contact capacitance generated by the screen when the specified area of the terminal screen gets close to the human body.

In the second embodiment, the specified area of the terminal screen may be disposed flexibly according to actual demand, for example the specified area may be disposed on the screen near the receiver, and the size and shape may be preferably adapted to the size of the PCB (printed circuit board) around the receiver.

In step 303, determining whether the distance between the specified area and the human body is greater than the distance threshold value based on the detected current value of the supply current of the contact capacitance generated by the screen, if not, step 304 is executed, and if yes, step 305 is executed. The detailed determining ways are shown herein below.

When the detected current value of the supply current of the contact capacitance is not less than a current threshold value, it is determined that the distance between the specified area and the human body is not greater than the distance threshold value, and when the capacitance value is less than the current threshold value, it is determined that the distance between the specified area and the human body is greater than the distance threshold value. The current threshold value is the current value of the supply current of the contact capacitance generated by the screen when the distance between the specified area and the human body equals to the distance threshold value.

Step 304, controlling the terminal screen to be turned off.

Step 305, controlling the terminal screen to be turned on.

By using the method disclosed in the second embodiment, whether the distance between the screen and the human body is greater than the distance threshold value is determined by the value relationship between the current value of the supply current of the contact capacitance generated by the screen when the screen gets close to the human body and the current threshold value, as a result, the screen can be controlled on and off more precisely based on the measurable control standard.

### Embodiment 3

Based on the same inventive concept, according to a method for controlling a terminal screen disclosed in the above embodiments of the disclosure, the third embodiment of the disclosure further discloses a corresponding terminal, the structure of which is shown in FIG. 4, which comprises:

a detecting module 401 for determining whether the distance between the specified area and the human body is greater than the distance threshold value based on the electrical signal generated by the screen when the specified area of the terminal screen gets close to the human body during the terminal is in the calling or call originating process;

a controlling module 402, for controlling the screen to be off if it is determined that the distance is not greater than the distance threshold value, and controlling the screen to be on if it is determined that the distance is greater than the distance threshold value.

Furthermore, the detecting module 401 is used for determining the capacitance value of the contact capacitance generated by the screen when the specified area of the terminal screen gets close to the human body, and when the capacitance value is not less than the capacitance threshold value, it is determined that the distance between the specified area and the human body is not greater than the distance threshold value, and when the capacitance value is less than the capacitance threshold value, it is determined that the distance between the specified area and the human body is greater than the distance threshold value.

Furthermore, the detecting module 401 is used for determining the current value of the supply current of the contact capacitance generated by the screen when the specified area of the terminal screen gets close to the human body, and when the current value is not less than the current threshold value, it is determined that the distance between the specified area and the human body is not greater than the distance threshold value, and when the capacitance value is less than the current threshold value, it is determined that the distance between the specified area and the human body is greater than the distance threshold value.

Furthermore, the terminal further comprises:
a radio frequency module 403 for determining the terminal is in the calling or call originating process, and informing the detecting module 401.

Furthermore, the specified area of the detecting module used to measure the distance away from the human body is located on the screen near the receiver.

To sum up, the technical solution disclosed in the embodiments of the disclosure comprises: during the calling or call originating process of the terminal, whether the distance between the specified area and the human body is greater than a distance threshold value is determined based on the electrical signal generated by the screen when the specified area of the terminal screen gets close to the human body. If the distance is determined not greater than the distance threshold value, the screen is controlled to be off, and if the distance is determined greater than the distance threshold value, the screen is controlled to be on. In the technical solution disclosed in the embodiments of the disclosure, the screen can be controlled to be on and off more precisely during the calling or call originating process of the terminal.

It should be noted that the above embodiments are only illustrated for describing the technical solution of the disclosure and not restrictive, and although the disclosure is described in detail by referring to the aforesaid embodiments, the skilled in the art should understand that the aforesaid embodiments can be modified and portions of the technical features therein may be equally changed, which does not depart from the spirit and scope of the technical solution of the embodiments of the disclosure.

## Claims

1. A method for controlling a terminal screen comprising:
during a calling process or a call originating process of the terminal, determining whether a distance between a specified area of the terminal screen and a human body is greater than a distance threshold value based on an electrical signal generated by the screen when the specified area gets close to the human body;
controlling the screen to be off if the distance is determinately not greater than the distance threshold value, and
controlling the screen to be on if the distance is determinately greater than the distance threshold value.

2. The method according to claim 1, wherein the step of determining whether the distance between the specified area and the human body is greater than the distance threshold value based on the electrical signal generated by the screen when the specified area of the terminal screen gets close to the human body comprising:
detecting a capacitance value of a contact capacitance generated by the screen when the specified area of the terminal screen gets close to the human body;
determining that the distance between the specified area and the human body is not greater than the distance threshold value when the capacitance value is not less than the capacitance threshold value;
determining that the distance between the specified area and the human body is greater than the distance threshold value when the capacitance value is less than the capacitance threshold value.

3. The method according to claim 1, wherein the step of determining whether the distance between the specified area and the human body is greater than a distance threshold value based on the electrical signal generated by the screen when the specified area of the terminal screen gets close to the human body comprising:
detecting a current value of a supply current of the contact capacitance generated by the screen when the specified area of the terminal screen gets close to the human body;
determining that the distance between the specified area and the human body is not greater than the distance threshold value when the current value is not less than the current threshold value;
determining that the distance between the specified area and the human body is greater than the distance threshold value when the capacitance value is less than the current threshold value.

4. The method according to any one of claims 1-3, wherein a radio frequency module of the terminal is used to determine the terminal is in the calling process or the call originating process.

5. The method according to any one of claims 1-4, wherein the specified area is located on the screen near an receiver.

6. A terminal, comprising:
a detecting module for determining whether a distance between a specified area and a human body is greater than a distance threshold value based on an electrical signal generated by a screen when the specified area of the terminal screen gets close to the human body during a calling process or a call originating process of the terminal;
a controlling module, for controlling the screen to be off if it is determined that the distance is not greater than the distance threshold value, and controlling the screen to be on if is determined that the distance is greater than the distance threshold value.

7. The terminal according to claim 6, wherein the detecting module is used for determining the capacitance value of the contact capacitance generated by the screen when the specified area of the terminal screen gets close to the human body, and when the capacitance value is not less than the capacitance threshold value, it is determined that the distance between the specified area and the human body is not greater than the distance threshold value, and when the capacitance value is less than the capacitance threshold value, it is determined that the distance between the specified area and the human body is greater than the distance threshold value.

8. The terminal according to claim 6, wherein the detecting module is used for determining the current value of the supply current of the contact capacitance generated by the screen when the specified area of the terminal screen gets close to the human body, and when the current value is not less than the current threshold value, it is determined that the distance between the specified area and the human body is not greater than the distance threshold value, and when is less than the current threshold value, it is determined that the distance between the specified area and the human body is greater than the distance threshold value.

9. The terminal according to any one of claims 6-8, further comprising:
a radio frequency module for determining the terminal is in the calling process or a call originating process, and for informing the detecting module.

10. The terminal according to any one of claims 6-9, wherein the specified area of the detecting module used to measure the distance away from the human body is located on the screen near the receiver.
